# EUROPÄISCHE PATENTSCHRIFT

(11) **EP 0 685 067 B1**
(45) Veröffentlichungstag und Bekanntmachung des Hinweises auf die Patenterteilung: **08.01.1997**
(21) Anmeldenummer: 94908322.4
(22) Anmeldetag: 16.02.1994
(51) Int. Cl.: G01N 23/22, G01N 23/20

(54) **GONIOMETER**
GONIOMETER
GONIOMETRE

(30) Priorität: 18.02.1993 DE 4304938
(43) Veröffentlichungstag der Anmeldung: 06.12.1995
(73) Patentinhaber: Daimler-Benz Aktiengesellschaft, 70546 Stuttgart (DE)
(72) Erfinder: GRÜNINGER, Hans-Wolfgang, D-65830 Kriftel (DE)
(74) Vertreter: Erbacher, Alfons, Dipl.-Ing.
(86) Internationale Anmeldenummer: EP9400442
(87) Internationale Veröffentlichungsnummer: WO9419682

(56) Entgegenhaltungen:
- EP-A- 0 183 043
- DE-A- 3 441 539
- GB-A- 2 191 284
- US-A- 3 344 274

## Beschreibung

Die Erfindung geht aus von einem Goniometer gem. dem Oberbegriff des Anspruchs 1.

Solche Goniometer sind zur Strukturanalyse von kristallinen Materialien bekannt. Normalerweise werden die Gitterkonstante, die Kristallorientierung (bei vielen Materialien die Textur) bestimmt. Bevorzugte Strahlung ist die Röntgenstrahlung der Kₐ-Linien von Kupfer, Molybdän und anderen Metallen. Die dazu verwendeten Goniometer bestehen aus einer Strahlenquelle, einem um drei Achsen schwenkbaren Probentisch, auf dem die Probe befestigt ist und einem auf einem Arm befestigten Detektor, mit dem die Teile des Raumes abgetastet werden können, in denen Reflexe zu erwarten sind.

Aus der Veröffentlichung "X-ray standing wave technique - Application to the study of surfaces and interfaces" von C. Malgrange and D. Ferret in Nuclear instruments and Methods in Physics Research A 314 (1992) S. 285 - 296, North-Holland, ist ein Verfahren bekannt, mit dessen Hilfe die Lokalisierung von Atomen in Kristallen und auf Kristallflächen bestimmt werden kann. Dabei wird von der Tatsache Gebrauch gemacht, daß bei Bragg-Reflexionen stehende Wellen entstehen, welche zu einer starken Anregung von Fluoreszenzstrahlung der dem Gitter an- oder eingelagerten Atome führt.

Die Variation der Fluoreszenzintensität in Abhängigkeit von der Winkelposition innerhalb des Bragg-Bereiches erlaubt es, eine Raumkoordinate des Fremdatoms zu bestimmen. Aus drei linear unabhängigen Bragg-Reflexen erhält man die drei Raumkoordinaten des Fremdatoms und damit eine genaue Lokalisierung im Wirtsgitter.

In der Praxis hat sich jedoch gezeigt, daß es schwierig ist, alle drei Raumkoordinaten der Fremdatome zu bestimmen. Der Grund liegt häufig in apparativen Gegebenheiten. Die Probe muß um drei Achsen im Raum drehbar sein, damit nicht nicht koplanare Netzebenen zur Reflexion gebracht werden. Die beim Durchfahren einer Rocking-Kurve auftretende Fluoreszenzstrahlung ist häufig sehr schwach, so daß der energiedispersive Detektor zur Registrierung dieser Strahlung an die Probenoberfläche nahe herangebracht werden muß.

Die in Frage kommenden Detektoren, das sind mit flüssige N₂ gekühlte SI(LI) oder Ge(Li)-Halbleiterdetektoren, sind voluminös und schwer. Sie können daher wegen der räumlichen Überschneidung der einzelnen Detektoren nicht nahe genug an die Probe herangebracht werden.

Die für dieses Verfahren benutzte Apparatur ist aber umständlich in der Bedienung und nutzt nicht den ganzen zur Verfügung stehenden Raumwinkel für die Detektoren aus.

Der Erfindung liegt die Aufgabe zugrunde, ein Goniometer nach dem Oberbegriff des Anspruchs 1 so zu gestalten, daß es handlich, leicht bedienbar und schnell betriebsbereit ist. Die Funktionen sollen leicht zu steuern und der gesamte zur Verfügung stehende Raumwinkelbereich durchfahrbar sein. Außerdem war für eine effektive und platzsparende Kühlung der Detektoren Sorge zu tragen.

Diese Aufgabe wird gem. der Erfindung mit den im kennzeichnenden Teil des Anspruchs 1 angegebenen Merkmalen gelöst.

Der Gegenstand des Anspruchs 1 weist die Vorteile auf, daß insbesondere der Fluoreszenzdetektor mit Hilfe eines raumsparenden leichten Kühlaggregats, welches auch beweglich gestaltet ist, mit dem Goniometerarm, auf welchem der Fluoreszenzdetektor befestigt ist, mitgeführt werden kann. Dieser Kühler benötigt keine Nachfüllgefäße für das Kühlmedium und ist sofort betriebsbereit. Außerdem paßt er sich auch einer kleinen Detektorstirnfläche an und ermöglicht es damit, nahe an die Probe heranzugehen.

Die Erfindung eignet sich auch für die Strukturbestimmung adsorbierter Monolagen von Atomen an einkristallinen Gitterebenen. Das Verfahren ermöglicht es, alle drei Raumkooridnaten der fluoreszierenden Atome zu bestimmen.

Vorteilhafte Ausgestaltungen des Gegenstands des Anspruchs 1 sind in den Unteransprüchen angegeben. Dadurch ist es möglich, in einem oder höchstens zwei Durchgängen den gesamten Raumwinkelbereich für die Bragg-Streuung und Fluoreszenzstreung zu erfassen. Dabei sind Umbauten am Goniometer auf ein Minimum beschränkt, weil höchstens eine Verschiebung des Fluoreszenzdetektors erforderlich ist, um den vom Fluoreszenzdetektor abgeschatteten Bereich nun auch vom Bragg-Detektor zu erfassen.

Durch Verkleinerung der Strahlungsdetektoren läßt sich folgendes erreichen: Durch weitgehende Reduzierung an Volumen und Gesicht wird es möglich, den Detektor mit der Probe auf der um drei Achsen drehbaren Probenhalterung zu befestigen und damit den Detektor nahe an die zu untersuchende Oberfläche heran zu bringen.

Die Verkleinerung betrifft in erster Linie das Kühlaggregat. Kleine elektrisch angetriebene Kühlgeräte, wie z. B. nach der Stirling-Prinzip arbeiten, sind wegen ihrer geringen Baugröße besonders vorteilhaft. Eine Versorgung mit flüssigem N₂ entfällt. Der Halbleiterdetektor ist mit Vorverstärker auf einem Kühlfinger montiert. Ein Vakuummantel zur Kälteisolation enthält ein Eintrittsfenster für die Strahlung.

Wegen der geringen Halbwertsbreite der Rocking-Kurve von fast perfekten Einkristallen können nur hochauflösende Röntgengoniometer verwendet werden. Da die Probe im Raum orientiert werden muß, kommt als Goniometer vorzugsweise das Vierkreisgoniometer zum Einsatz. Ein geeigneter Detektor kann nun an einer der drei Achsen der Probenhalterung befestigt werden, entsprechend den Erfordernissen der Messungen. Die flexibelste Lösung ist wohl eine Befestigung am Chi-Kreis eines solchen Difffrak- tiometers. Bei einer Bewegung der Probe bleibt der Detektor in definierter Lage bezüglich der Oberfläche der Probe. Auch wird bei dieser Anordnung die Beugungsgeometrie am wenigstens beeinflußt. Eine Vorrichtung zum Einstellen des Abstandes der Probenoberfläche vom Detektor ist vorzusehen. Auch eine Befestigung des Detektors an der Phi- oder Theta-Achse ist vorteilhaft. Der Detektor muß jedoch bei Bewegung der Probe u. U. umgesetzt werden.

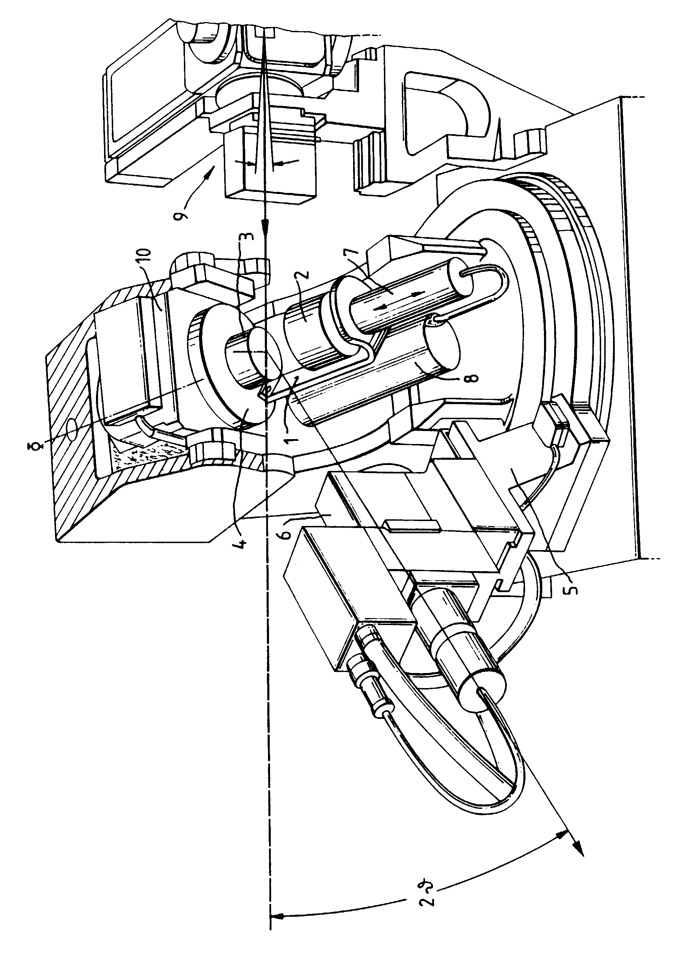

Die Erfindung wird nun anhand eines Ausführungsbeispiels unter Zuhilfenahme der Zeichnung erläutert. Die Zeichnung zeigt ein Goniometer, welches nach der Erfindung modifiziert ist. Die Probe 3 ist auf dem Probentisch 4 befestigt und kann in drei Achsen relativ zum hier von rechts einfallenden Strahl geschwenkt werden.

In üblicher Weise ist ein Bragg-Detektor 6 vorgesehen, welcher auf einem Arm 5 beweglich ist und den zur Verfügung stehenden Raum abtastet. Dies geschieht vorzugsweise computergesteuert mit Hilfe von Schrittmotoren und Winkeldecodierung. Der Fluoreszenzdetektor 2 ist mit der ersten Stufe des Vorverstärkers auf einem Kühlfinger 7 befestigt, welcher von einem Kompressor 8 mit dem Kühlmedium versorgt wird. Der Fluoreszenzdetektor 2 ist mit seinem Halter 1 am Probentisch 4 (Phi-Kreis) derart befestigt, daß er mit dem Probentisch mitgeschwenkt wird. Der in dem Halter 1 befestigte Detektor 2 ist mit seiner Oberfläche parallel zur Probe 3 ausgerichtet und so nahe wie möglich an diese herangebracht. In einer bevorzugten Ausführungsform der Erfindung wird durch Verschieben des Fluoreszenzdetektors 2 in Richtung der Pfeile (s. Figur) der Abstand von der Probe 3 möglichst klein gewählt und den Einstrahl- und Abstrahlwinkeln angepaßt, damit die Strahlung die Probe erreichen und von dort in den Bragg-Detektor 6 gelangen kann.

Der Fluoreszenzdetektor 2 stört u. Um. den Meßvorgang des Bragg-Detektors 6. Deshalb wird in einer weiteren vorteilhaften Ausführungsform der Erfindung vorgeschlagen, den Fluoreszenzdetektor etwas seitlich zu verschwenken, so daß der gewünschte Raumwinkelbereich nunmehr vom Bragg-Detektor 6 in einem zweiten Durchlauf erfaßt werden kann. Wegen der Symmetrie der Bragg-Reflexe ist es allerdings nicht nötig, den gesamten Halbraum zu erfassen. Man benötigt lediglich die Information aus einem Viertel des gesamten Raumwinkels und kann dann die Fluoreszenzstrahlung aus dem übrigen zugänglichen Raumwinkelbereich erfassen.

Alternativ dazu kann der Fluoreszenzdetektor auch auf dem schwenkbaren Arm 10 (Chi-Kreis) besfestigt werden.

Als Strahlenquelle 9 kann eine Röntgenröhre verwendet werden. Es ist jedoch wegen der Intensität von besonderem Vorteil, Synchrontronstrahlung zu verwenden. Dabei kann dieselbe Anordnung verwendet werden.

Der Fluoreszenzdetektor besteht aus einem Lithium gedrifteten Silicium- oder Germaniumkristall, welcher auf einem Kühlfinger befestigt in ein evakuiertes Gehäuse eingeschlossen ist. Die Röntgenfluoreszenzstrahlung fällt durch ein Berylliumfenster auf den Detektorkristall in der Vakuumkammer. Der Kristall ist ebenso gekühlt, wie die erste Stufe des Vorverstärkers. Der Detektorkristall wird möglichst direkt mit seiner Rückseite auf dem Kühlfinger befestigt. Mit dem hier verwendeten Stirlingkühler können in kurzer Zeit -170 °C und weniger erreicht werden.

Es folgt die Beschreibung des Meßvorgangs an einer Kristallprobe. Zuerst wird die Rockingkurve (Bragg-Peak) eines ausgewählten Reflexes gemessen und daraus die genaue Lage θ_{B} und die Halbwertsbreite Δθ_{B} des Peaks bestimmt. In einem zweiten Lauf wird der Winkelbereich θ_{B} + Δθ_{B} in kleinen Winkelschritten durchfahren und die Fluoreszenzstrahlung der angeregten Fremdatome mit einem Vielkanalanalysator registriert. Aus dem Intensitätsverlauf der Strahlung in Abhängigkeit von der Winkelposition kann dann - wie in der Literatur beschrieben - (Malfrange et al.) die Ortskoordinate des fluoreszierenden Atoms in einer Richtung senkrecht zur Netzebene des Reflexes bestimmt werden.

Wiederholt man diese Prozedur an zwei weiteren unabhängigen Reflexen, so erhält man drei Koordinaten zur räumlichen Fixierung des Atoms innerhalb des Wirtsgitters.

## Patentansprüche

1. Goniometer mit mehreren Achsen, um welche die zu untersuchende Kristallprobe drehbar ist, einer Strahlungsquelle, einem Detektor für Bragg-Reflexionen und einem Detektor für Fluoreszenzstrahlung, welche die gleichzeitige Messung von Gittergeometrie und chemischer Zusammensetzung ermöglichen,
**dadurch gekennzeichnet**,
daß der in einem Halter (1) befestigte Detektor (2) für die Fluoreszenzstrahlung mit seiner Oberfläche parallel zu der dem Detektor zugewandten Oberfläche der Probe (3) ausgerichtet und mit der Probe (3) um drei Achsen (φ,Θ,γ) drehbar am Probentisch (4) derart befestigt ist, daß Reflexe mit dem in einem schwenkbaren Arm (5) 20 befestigten Bragg-Detektor (6) und die Fluoreszenzstrahlung mit dem Fluoreszenzdetektor (2) gleichzeitig beobachtbar sind.

2. Goniometer nach Anspruch 1,
**dadurch gekennzeichnet**,
daß der Raumwinkelbereich, welcher vom Fluoreszenzdetektor (2) erfaßt ist, dem Bragg-Detektor (6) in einem zweiten Meßdurchgang zugänglich gemacht ist, indem der Fluoreszenzdetektor mit seinem Halter in eine neue Position gebracht ist, welche der Bragg-Detektor (6) bereits erfaßt hat.

3. Goniometer nach Anspruch 1,
**dadurch gekennzeichnet**,
daß die Untersuchung bezüglich der von der Probe (3) in den den Meßgeräten zugewandten Halbraum abgegebenen Strahlung derart vorgenommen wird, daß der Bragg-Detektor (6) den oberen Halbraum bestreicht, während der Fluoreszenzdetektor (2) die Fluoreszenzstrahlung aus dem unteren Halbraum mißt.

4. Goniometer nach Anspruch 1,
**dadurch gekennzeichnet**,
daß der Abstand des Fluoreszenzdetektors (2) von der Probe (3) gerade so groß gemacht ist, daß die Einstrahlung und die Braggreflexion nicht abgeschattet sind.

5. Goniometer nach einem der Ansprüche 1 bis 4,
**dadurch gekennzeichnet**,
daß als Strahlungsquelle eine Röntgenröhre verwendet ist.

6. Goniometer nach einem der Ansprüche 1 bis 4,
**dadurch gekennzeichnet**,
daß Synchrontronstrahlung verwendet ist.

7. Goniometer nach einem der Ansprüche 1 bis 6,
**dadurch gekennzeichnet**,
daß der Fluoreszenzdetektor (2) mit einem Kühlfinger (7), an dessen Stirnseite er befestigt ist, auf mindestens -70 °C heruntergekühlt ist.

8. Goniometer nach einem der Ansprüche 1 bis 7,
**dadurch gekennzeichnet**,
daß ein Stirlingkühler verwendet ist.

9. Goniometer nach einem der Ansprüche 1 bis 8,
**dadurch gekennzeichnet**,
daß der Fluoreszenzdetektor (2) so klein wie möglich gehalten ist und in möglichst geringem Abstand auf die Probe (3) ausgerichtet ist.

10. Goniometer nach einem der Ansprüche 1 bis 9,
**dadurch gekennzeichnet**,
daß im Kühlfinger (7) ein Stirling-Element angeordnet ist, welches die adiabatische Entspannung des Kühlmediums bewirkt, daß über eine Leitung dem Kühlfinger (7) das komprimierte Gas zugeführt und das entspannte Gas über die gleiche Leitung zum Kompressor zurückgeführt wird.

## Claims

1. Goniometer with several axes, about which the crystal sample to be investigated is rotatable, a radiation source, a detector for Bragg reflections and a detector for fluorescent radiation, which enable the simultaneous measurement of lattice geometry and chemical composition, characterised thereby that the detector (2), which is fastened in a holder (1), for the fluorescent radiation is oriented with its surface parallel to the surface of the sample (3) facing the detector and is fastened to the sample table (4) to be rotatable with the sample (3) about three axes (φ, θ, χ) in such a manner that the reflections are observable with the Bragg detector (6) mounted in a pivotable arm (5) and the fluorescent radiation by the fluoresence detector (2) simultaneously.

2. Goniometer according to claim 1, characterised thereby that the angular range in space which is detected by the fluorescence detector (2) is made accessible to the Bragg detector (6) in a second measurement pass, in that the fluorescence detector is mounted by its holder in a new position which the Bragg detector (6) has already detected.

3. Goniometer according to claim 1, characterised thereby that the investigation with respect to the radiation delivered by the sample (3) into the semi-infinite body facing the measuring apparatus is undertaken in such a manner that the Bragg detector (6) sweeps the upper semi-infinite body while the fluorescence detector (2) mixes the fluorescent radiation from the lower semi-infinite body.

4. Goniometer according to claim 1, characterised thereby that the spacing of the fluorescence detector (2) from the sample (3) is made just so large that the entering radiation and the Bragg reflection are not shaded.

5. Goniometer according to one of claims 1 to 4, characterised thereby that a Roentgen tube is used as radiation source.

6. Goniometer according to one of claims 1 to 4, characterised thereby that synchrotron radiation is used.

7. Goniometer according to one of claims 1 to 6, characterised thereby that the fluorescence detector (2) is cooled down to at least -70° by a cooling finger (7), to the end face of which it is fastened.

8. Goniometer according to one of claims 1 to 7, characterised thereby that a Stirling cooler is used.

9. Goniometer according to one of claims 1 to 8, characterised thereby that the fluorescence detector (20) is kept as small as possible and is oriented at the smallest possible spacing from the sample (3).

10. Goniometer according to one of claims 1 to 9, characterised thereby that a Stirling element, which causes adiabatic expansion of the coolant, is arranged in the cooling finger, and that the compressed gas is fed to the cooling finger (7) by way of a duct and the expanded gas is fed back to the compressor by way of the same duct.

## Revendications

1. Goniomètre comprenant plusieurs axes, autour desquels l'échantillon de cristal à examiner peut tourner, une source de rayonnement, un détecteur pour les réflexions de Bragg et un détecteur pour le rayonnement fluorescent, lesquels permettent la mesure simultanée de la géométrie réticulaire et de la composition chimique,
caractérisé en ce que
le détecteur (2), fixé dans un support (1), est orienté, pour le rayonnement fluorescent, avec sa surface parallèlement à la surface de l'échantillon (3), qui est tournée vers le détecteur, et est fixé sur la table d'echantillon (4), de manière à tourner avec l'échantillon (3) autour de trois axes (φ,θ,γ) de manière qu'on puisse observer simultanément des reflets avec le détecteur de Bragg (6) fixé sur un bras pivotant (5) et le rayonnement fluorescent avec le détecteur de fluorescence (2).

2. Goniomètre selon la revendication 1,
caractérisé en ce que
la zone angulaire spatiale, qui est balayée par le détecteur de fluorescence (2), est rendue accessible au détecteur de Bragg (6) dans un second passage de mesure, dans le fait que le détecteur de fluorescence est amené, avec son support, dans une nouvelle position que le détecteur de Bragg (6) a déjà détectée.

3. Goniomètre selon la revendication 1,
caractérisé en ce que l'examen, concernant le rayonnement, délivré par l'échantillon (3) dans la moitié d'espace tournée vers les appareils de mesure, est effectué de manière que le détecteur de Bragg (6) balaye la moitié supérieure d'espace tandis que le détecteur de fluorescence (2) mesure le rayonnement fluorescent provenant de la moitié inférieure d'espace.

4. Goniomètre selon la revendication 1,
caractérisé en ce que la distance entre le détecteur de fluorescence (2) et l'échantillon (3) est dimensionnée pour que cela ne fasse pas écran pour le rayonnement et la réflexion de Bragg.

5. Goniomètre selon l'une des revendications 1 à 4,
caractérisé en ce qu' on utilise en tant que source de rayonnement un tube à rayons X.

6. Goniomètre selon l'une des revendications 1 à 4,
caractérisé en ce qu' on utilise un rayonnement de synchrontron

7. Goniomètre selon l'une des revendications 1 à 6,
caractérisé en ce que le détecteur de fluorescence (2) est refroidi à au moins -70°C par un doigt de refroidissement (7) sur la face avant duquel il est fixé.

8. Goniomètre selon l'une des revendications 1 à 7,
caractérisé en ce qu' un refroidisseur Stirling est utilisé.

9. Goniomètre selon l'une des revendications 1 à 8,
caractérisé en ce que le détecteur de fluorescence (2) est maintenu aussi petit que possible et est dirigé sur l'échantillon (3) à la plus petite distance possible.

10. Goniomètre selon l'une des revendications 1 à 9,
caractérisé en ce que dans le doigt de refroidissement (7) est disposé un élément de Stirling qui provoque le relâchement adiabatique de l'agent de refroidissement, en ce qu'une conduite amène le gaz comprimé au doigt de refroidissement (7) et que le gaz relâché est ramené au compresseur par la même conduite.
